# EUROPEAN PATENT SPECIFICATION

(11) **EP 3 460 868 B1**
(45) Date of publication and mention of the grant of the patent: **22.04.2020**
(21) Application number: 18184045.5
(22) Date of filing: 17.07.2018
(51) Int. Cl.: H01M 2/10, H01M 2/12, H01M 10/48, H01M 6/50, H01M 10/613, H01M 10/42

(54) **BATTERY MODULE**
BATTERIEMODUL
MODULE DE BATTERIE

(30) Priority: 25.09.2017 CN 201710876122
(43) Date of publication of application: 27.03.2019
(73) Proprietor: Contemporary Amperex Technology Co., Limited, Jiaocheng District Ningde City, Fujian 352100 (CN)
(72) Inventor: HUANG, Yincheng, Ningde City, Fujian 352100 (CN); WU, Buwei, Ningde City, Fujian 352100 (CN); PENG, Haoran, Ningde City, Fujian 352100 (CN)
(74) Representative: Boult Wade Tennant LLP

(56) References cited:
- WO-A1-2017/143564
- CN-A- 101 752 597
- CN-A- 105 024 021
- CN-B- 103 199 203
- CN-U- 202 721 213

## Description

### TECHINICAL FIELD

The present invention relates to the technical field of batteries, and more particularly to a battery module.

### BACKGROUND

With continuous developments of battery technologies, requirements for a battery module are also constantly improving. In the case that a battery module is in a relatively bad environment, such as in an extreme high temperature environment, how to improve environmental temperature conditions of batteries in the battery module required for safe operation have become an urgent problem to be solved.

Currently, the problem about environmental temperature conditions of batteries in a battery module for operation is solved mainly by an air conditioner or other devices at a system level. Although this method can improve environmental temperature conditions of batteries in a battery module for safe operation to some extent, a heat exchange medium can only be in surface contact with a part of the batteries because the batteries of the battery module are stacked in one signal direction and their large surfaces are sequentially bonded to each other and then fixed within a box. Further, it is difficult to effectively improve temperature of each of the batteries in a battery module due to internal arrangement of the system and installation location of an air conditioner or the like, which cause the batteries have a big temperature difference, and thus impact safety and lifetime and other performances of the battery module and limit application range of the battery module.

Therefore, a new battery module is urgently needed.

### SUMMARY

The embodiments of the present invention provide a battery module that can effectively improve temperature of each of batteries in the battery module, ensure safety and lifetime of the battery module, and enlarge application range of the battery module.

In an aspect according to embodiments of the present invention, there is provided a battery module. The battery module includes: a box having a cavity and having a bottom plate, a top plate and a side plate connecting the bottom plate and the top plate, wherein the side plate, the top plate and the bottom plate together form the cavity, and the side plate has ventilation holes communicating with the cavity; first spacers distributed on a surface of the bottom plate facing the cavity in order to form a plurality of first units; a plurality of batteries corresponding to the plurality of first units, wherein airflow passages are formed among the plurality of batteries; and a fan on the side plate communicating with the cavity for discharging an airflow entering the cavity through the ventilation holes away from the cavity through the airflow passages.

In an aspect according to embodiments of the present invention, the side plate has first protrusions that abut against the batteries near the side plate so that a channel communicating with the airflow passages is provided between the batteries and the side plate.

In an aspect according to embodiments of the present invention, the first spacer has a height which is 5% to 10% of a height of the battery, and the first spacer has a thickness which is 10% to 15% of a thickness of the battery.

In an aspect according to embodiments of the present invention, the top plate has second spacers distributed on a surface of the top plate facing the cavity so as to form second units respectively corresponding to the first units, wherein each of the batteries is provided between a corresponding first unit and a corresponding second unit.

In an aspect according to embodiments of the present invention, the second unit has a size larger than a size of a corresponding first unit, and wherein second protrusions are provided on a side wall of the second spacer for fixing a battery to a corresponding second unit.

In an aspect according to embodiments of the present invention, the second protrusion is a wedge-shaped structure and has a small end located near the bottom plate.

In an aspect according to embodiments of the present invention, a deformable groove is defined between the second protrusion and the second spacer, and has an opening facing the bottom plate.

In an aspect according to embodiments of the present invention, the side plate is a split structure which comprises a lower side plate connected with the bottom plate and a upper side plate connected with the top plate, and wherein each of the lower side plate and the upper side plate has connection lugs so that the lower side plate and the upper side plate are butt-locked together.

In an aspect according to embodiments of the present invention, clamping grooves are provided on a side of the top plate facing away from the bottom plate for placing electrical connectors, and wherein the plurality of batteries are electrically connected via the electrical connectors, and wherein a cap is provided on the clamping groove and is connected to the top plate.

In an aspect according to embodiments of the present invention, the box is a cuboid, the side plate is formed by enclosure of four plate pieces, at one of which the fan is located and the other three of which are respectively provided with the ventilation hole.

In an aspect according to embodiments of the present invention, the battery module further includes a battery management system connected with the plurality of the batteries and the fan for controlling turn-on or turn-off of the fan by detecting temperature parameters of the plurality of the batteries.

According to embodiments of the present invention, the battery module includes a box having a cavity, a side plate provided with ventilation holes and a fan respectively communicated with the cavity, a bottom plate provided with first spacers for forming a plurality of units, and a plurality of batteries correspondingly disposed in the plurality of first units to form airflow passages among the plurality of batteries. With the fan, an airflow entering the cavity through the ventilation holes is discharged away from the cavity through the airflow passages in order to take heat of the batteries away. Since there are airflow passages among the plurality of batteries, it is possible for an airflow entering through the ventilation holes to flow through a plurality of surfaces of the batteries so that environmental temperature conditions of each of the batteries can be improved, which enables long-term, stable operation of the battery module, ensures safety and lifetime of the battery module, and expands application range of the battery module.

### BRIEF DESCRIPTION OF THE DRAWINGS

The features, advantages and technical beneficial of exemplary embodiments of the present invention will be described by reference to the accompanying drawings.
Fig. 1 is an exploded view of a battery module according to embodiments of the present invention;
Fig. 2 is an isometric view of a lower frame according to embodiments of the present invention;
Fig. 3 is an isometric view of an intermediate frame in a direction according to embodiments of the present invention;
Fig. 4 is an enlarged view of the portion A of Fig. 3;
Fig. 5 is an isometric view of the intermediate frame in another direction according to embodiments of the present invention;
Fig. 6 is an isometric view of a lug-hanging piece according to embodiments of the present invention; and
Fig. 7 is a schematic view of an overall structure of a battery module according to embodiments of the present invention.

| | | | | | |
|---|---|---|---|---|---|
| 10 | Box; | 101 | Lower frame; | 102 | Intermediate frame |
| 11 | Bottom plate | | | | |
| 12 | Side plate; | 12a | lower side plate; | 12b | upper side plate |
| 13 | Top plate; | 131 | Mounting hole; | 132 | Rib |
| 14 | Cavity | | | | |
| 15 | Connection lug | | | | |
| 16 | Ventilation hole | | | | |
| 17 | Through hole | | | | |
| 20 | Fan; | 21 | Fan cap | | |
| 30 | Battery | | | | |
| 40 | First spacer; | 41 | First unit | | |
| 50 | First protrusion | | | | |
| 60 | Airflow passage | | | | |
| 70 | Second spacer; | 71 | Second unit; | 72 | Deformable groove |
| 80 | Second protrusion | | | | |
| 90 | Battery management system | | | | |
| 100 | cover | | | | |
| 110 | Connector | | | | |
| 120 | Electrical connector | | | | |
| 130 | Lug-hanging piece | | | | |
| 130a | First connection plate; | 130b | Second connection plate | | |

### DETAILED DESCRIPTION

The features and exemplary embodiments of the various aspects of the present invention will be described in detail below. In the following detailed descriptions, numerous specific details are set forth in order to provide a thorough understanding of the present invention. It will be apparent, however, to those skilled in the art that the present invention may be practiced without the need for some of the details in these specific details. The following description of the embodiments is merely for providing a better understanding of the present invention by showing examples of the present invention. In the drawings and the following descriptions, at least a part of well-known structures and techniques is not shown in order to avoid unnecessarily obscuring the present invention. Further, for clarity, the size of some of the structures may be exaggerated. Furthermore, the features, structures, or characteristics described below can be combined in any suitable manner in one or more embodiments. In addition, the terms "first", "second", "third" and the like are used for descriptive purposes only and cannot be interpreted as indicating or implying relative importance.

The terms denoting directions that appear in the following description indicate directions shown in the drawings, and do not limit specific structure of the battery module of the present invention. In the descriptions of the present invention, it should also be noted that the terms "mount" and "connect" should be interpreted in a broad sense unless explicitly defined and limited otherwise. For example, it may indicate "fixed connection", "disassemble connection" or "integral connection"; it may indicate a direct connection or an indirect connection. For those skilled in the art, specific meanings of the above terms in the present invention may be understood as the case may be.

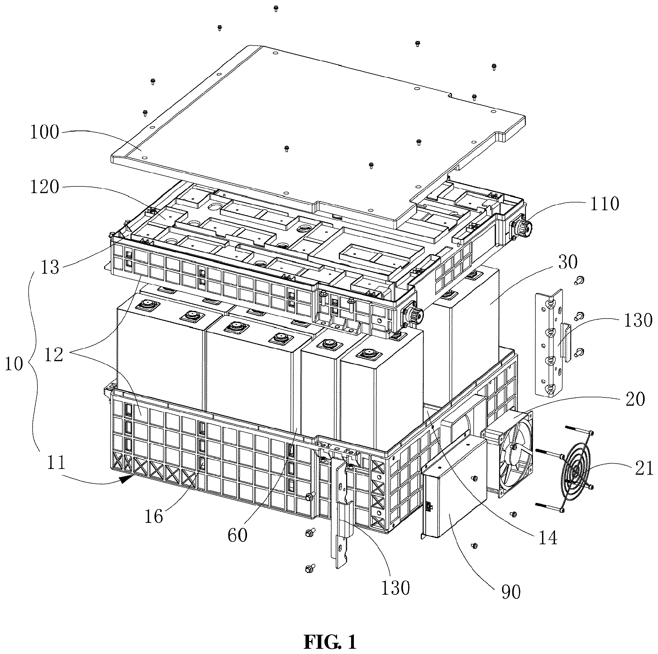

For a better understanding of the present invention, a battery module according to embodiments of the present invention will be described in detail below with reference to Fig. 1 to Fig. 7.

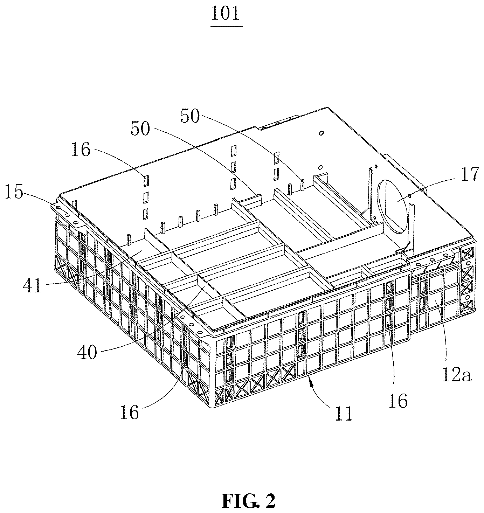

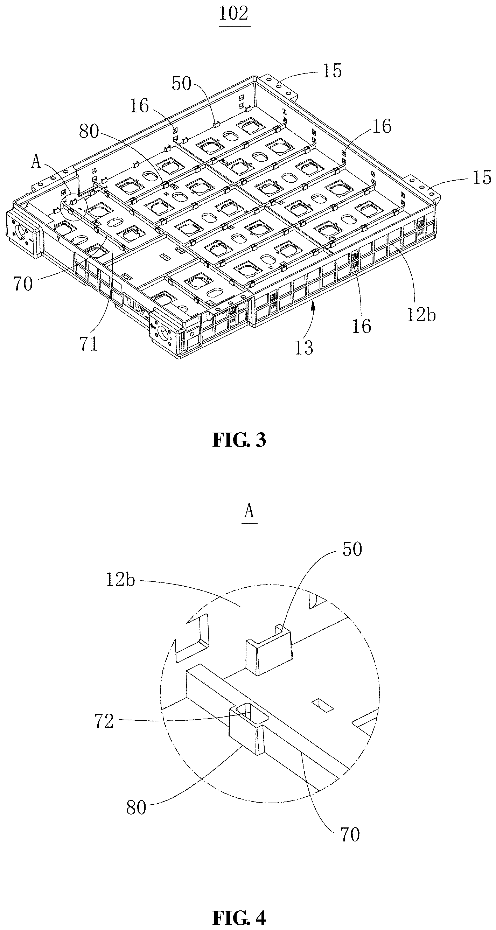

Referring to Fig. 1 to Fig. 4, Fig. 1 is an exploded view of a battery module according to embodiments of the present invention, Fig. 2 is a isometric view of a lower frame according to embodiments of the present invention, and Fig. 3 is a isometric view of an intermediate frame in a direction according to embodiments of the present invention.

The battery module according to an embodiment of the present invention includes a box 10, a plurality of batteries 30 disposed in the box 10, and a fan 20 disposed on the box 10.

The box 10 has a cavity 14 therein. The box 10 includes a bottom plate 11, a top plate 13, a side plate 12 connecting the bottom plate 11 and the top plate 13. The side plate 12, the top plate 13 and the bottom plate 11 together form the cavity 14. The side plate 12 is a split structure comprising a lower side plate 12a connected to the bottom plate 11 and a upper side plate 12b connected to the top plate 13. The lower side plate 12a and the bottom plate 11 together constitute a lower frame 101 as shown in Fig.2, and the upper side plate 12b and the top plate 13 together constitute an intermediate frame 102 as shown in Fig. 3. On each of the lower side plate 12a and the upper side plate 12b, a connecting lug 15 is provided correspondingly. The connecting lug 15 is a strip of flange structure. The lower side plate 12a and the upper side plate 12b may have a plurality of connecting lugs 15. The corresponding connecting lugs on the lower side plate 12a and on the upper side plate 12b may be butt-locked by a fastener in order to form the box 10.

The box is a cuboid as a whole. The side plate 12 is circumferentially butted and joined by four plate pieces. On each of three plate pieces of the side plate, ventilation holes 16 are provided for communicating with the cavity 14. It may be that only one of the lower side panel 12a and the upper side panel 12b has the ventilation holds 16. It is preferable that both the lower side panel 12a and the upper side panel 12b are provided with the ventilation holes 16. The ventilation hole 16 may be a square hole with rounded corners, in order to better reduce wind resistance and increase amount of air intake. The ventilation hole 16 may be a circular hole, an oval hole or an irregularly shaped hole. The ventilation holes 16 are not limited to be provided on the three plate pieces of the side plate 12. It is possible to provide the ventilation holes 16 on one or two plate pieces or on all of four plate pieces. In an embodiment where the three plate pieces are provided with the ventilation holes 16, a cold airflow can enter the box 10 through the ventilation holes 16 from multiple directions, and thus a better cooling effect can be obtained.

The fan 20 is disposed on the fourth plate piece of the side plate 12. Particularly, the fan 20 may be disposed on the lower side plate 12a. The lower side plate 12a has a through hole 17 communicating with the cavity 14, and the fan 20 is mounted at a position on the lower side plate 12a where the through hole 17 is located. In order to ensure safety of the fan 20, a fan cap 21 is provided on an outer side of the fan 20. The fan cap 21 and the fan 20 are fastened to the lower side plate 12a by fasteners. The plate piece on which the fan is located does not have a ventilation hole 16 so that a hot airflow discharged by the fan 20 is prevented from being sucked back into the box 10 so as to ensure the cooling effect.

First spacers 40 are provided on the bottom plate 11 of the box 10. The first spacer 40 is a strip-shaped plate piece. The first spacers 40 are distributed on a surface of the bottom plate 11 facing the cavity 14 to form a plurality of first units 41. The plurality of first units 41 are arranged in a staggered pattern on the bottom plate 11. The first units 41 may be arranged laterally or longitudinally in one direction.

The plurality of batteries 30 respectively is a square battery and have the same number as that of the plurality of first units 41. Correspondingly, each of the first units 41 is square, and the plurality of batteries 30 are correspondingly disposed in the plurality of first units 41. That is, the batteries 30 are disposed in the first unit 41 correspondingly, and their locations on the bottom plate 11 are limited by the first spacers 40 of the first unit 41. Meanwhile, in order to ensure stability of the batteries 30 in the box 10, a structural glue is further disposed between bottom of the batteries 30 and the bottom plate 11 to further stabilize connection of the batteries 30 with the bottom plate 11.

Since the plurality of batteries 30 are distributed in different first units 41, every two adjacent batteries 30 are separated by a first spacer 40 such that the plurality of batteries 30 are not in contact with each other and thus airflow passages 60 are formed among the plurality of batteries 30.

When the fan 20 is working, a negative pressure is formed at a position within the cavity 14 of the battery module. In order to ensure the effect, a negative pressure forming space may be reserved within the module corresponding to the fan 20 so that a pressure difference is generated between inside and outside of the battery module and thereby a cold airflow entering the cavity 14 through the ventilation holes 16 from outside is discharged away from the cavity through the airflow passages 60. When the cold airflow circulate through the airflow passages 60, the airflow contacts multiple surfaces of the batteries 30, and then exits the cavity 14 by the fan 20 after heat exchange with the batteries 30. In this way, it is possible to effectively improve environmental temperature conditions of each batteries 30, and thereby enable a long-term and stable operate of the module, ensure safety and lifetime of the battery module, and expand application range of the battery module.

The first spacer 40 has a predetermined height and a thickness that make it possible to prevent the plurality of batteries 30 from directly contacting with each other due to expansion and deformation of one or more of the plurality of the batteries 30, in order to ensure existence of the airflow passages 60 among the batteries 30 and thus ensure heat dissipation effect of each of the batteries 30.

The height of the first spacer 40 is 5% -10% of the height of the battery 30, and the thickness of the first spacer 40 is preferably 10% -15% of the thickness of the batteries 30. With the height, it is possible for the first spacer 40 to ensure a fixing effect on corresponding batteries 30, to avoid being in contact with a bulge expansion area of the batteries 30 and being subject to a force from expansion and deformation of the batteries 30. Further, it is possible to prevent the plurality of batteries 30 from directly contacting with each other due to expansion and deformation of one or more of the plurality of the batteries, and increase contact area of the batteries 30 with a cold airflow to the full extent while ensuring the fixing effect on the corresponding batteries 30.

With the thickness, it is possible for the first spacer 40 to limit the airflow passage 60 between two adjacent batteries 30 within a certain range and prevent the plurality of batteries 30 from directly contacting with each other due to expansion and deformation of one or more of the plurality of the batteries, and to optimize the airflow passages 60 to enable a space in the box 10 to be utilized more rationally. In order to facilitate installation of the batteries 30, the first spacer 40 has a beveled corner at an end of the first spacer 40 away from the bottom plate 11.

As an optional implementation, first protrusions 50 are provided on the side plate 12, and the first protrusions 50 abut against the batteries 30 close to the side plate 12. Specifically, both of the lower side plate 12a and the upper side plate 12b are provided with the first protrusions 50. The first protrusions 50 on the lower side plate 12a may be multiple block-like structures arranged uniformly along a length direction of the lower side plate 12a, or may be a plate structure extended along the length direction of the lower side plate 12a. The bottom of the first protrusion 50 on the lower side plate 12a is connected to the bottom plate 11 and the top of the first protrusion 50 is inclined at an angle so as to facilitate installation of the batteries 30. The first protrusion 50 on the upper side plate 12b is a U-shaped block structure having an opening. The U-shaped opening faces the upper side plate 12b, two ends of the U-shaped opening face the bottom plate 11 and the top plate 13, respectively, and the end facing the top plate 13 is connected to the top plate 13. By providing the first protrusions 50 on the side plate 12, the batteries 30 near the side plate 12 are disposed at a predetermined distance from inner wall of the side plate 12, such that a channel communicating with the airflow passages 60 is also formed between the batteries 30 and the inner wall of the side plate 12 to ensure that side surface of the batteries 30 near the side plate 12 can sufficiently contact with an airflow entering via the ventilation holes 16 and thereby further effectively improve environmental temperature conditions of each of the batteries 30.

As an optional implementation, second spacers 70 are provided on the top plate 13, and the second spacers 70 are distributed on a surface of the top plate 13 facing the cavity 14 to form second units 71 corresponding to the first units 41. A top part of each of the plurality of batteries 30 is inserted into a corresponding second unit 71 so that the plurality of batteries 30 are respectively clamped between the first unit 41 and the corresponding second units 71. That is, each of the batteries 30 is sandwiched between a first unit 41 and a second unit 71 corresponding to itself so that the batteries 30 can be limited well, which helps to stabilize a gap between the airflow passages 60 and thus ensure heat dissipation.

The first units 41 on the bottom plate 11 and the second units 71 on the top plate 13 may have processing errors during manufacture. In order to avoid misalignment of a first unit 41 and a corresponding second unit 71 due to processing errors and thus present a corresponding battery30 cannot been assembled between the first unit 41 and the second unit 71, in an optional implementation, the second unit 71 has a size larger than that of a corresponding first unit 41 so as to reserve a larger installation space on the second unit 71 than on the corresponding first unit 41 so as to facilitate clamping of the plurality of batteries 30 between the first units 41 and the second units 71, which prevents the batteries 30 cannot be assembled within corresponding first units 41 and second units 71 due to processing errors and the like. Further, in order to better fix the batteries 30 within the second unit 71, second protrusions 80 are provided on a sidewall of the second spacer 70. The second protrusion 80 may be a wedge-shaped structure and its small end is located close to the bottom plate 11, so that the top end of a battery 30 is more conveniently inserted into a corresponding second unit 71. A deformable groove 72 is formed between the second protrusion 80 and the second spacer 70. The deformable groove 72 is a square groove. The opening of the deformable groove 72 faces the bottom plate 11. The deformable groove 72 is provided such that the second protrusion 80 has a certain amount of deformation for facilitating installation of the battery 30 and fixing of the battery 30 more tightly in the second unit 71.

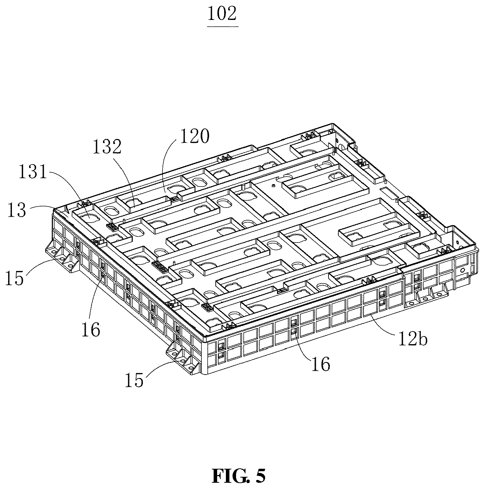

Referring to Fig. 5 as well, which is an isometric view of the intermediate frame 102 in another direction according to embodiments of the present invention, clamping grooves are provided on a side of the top plate 13 facing away from the bottom plate 11. The clamping groove is formed by using ribs 132 on the top plate 13. An electrical connector 120 is disposed in the clamping groove. The electrical connector 120 may be an aluminum connector. In addition, the top plate 13 is provided with mounting holes 131, each of which is used for mounting an electrode of the battery 30. The electrode of each of the battery 30 protrudes into a corresponding mounting hole 131. The electrical connector 120 may be specifically soldered with an electrode terminal of the battery 30 such that the plurality of batteries 30 are connected in series or in parallel with each other.

A cover 100 is disposed on the top of the clamping groove of the top plate 13. The shape and size of the cover 100 are matched with the box 10. The cover 100 and the top plate 13 are connected by a fastener. By providing the cover 100, it is possible to effectively prevent occurrence of a short circuit of the battery module caused by drop-in of a foreign matter outside the battery module.

A connector 110 is also provided on the upper side panel 12b for electrical connection with other devices. The connector 110 may be fastened to the upper side panel 12b by a fastener.

Both the box 10 and the cover 100 are made of a composite material of polypropylene plastic and 20% glass fiber through an injection molding process, so that the box 10 and the top plate 13 have high strength, light weight and good insulation effect.

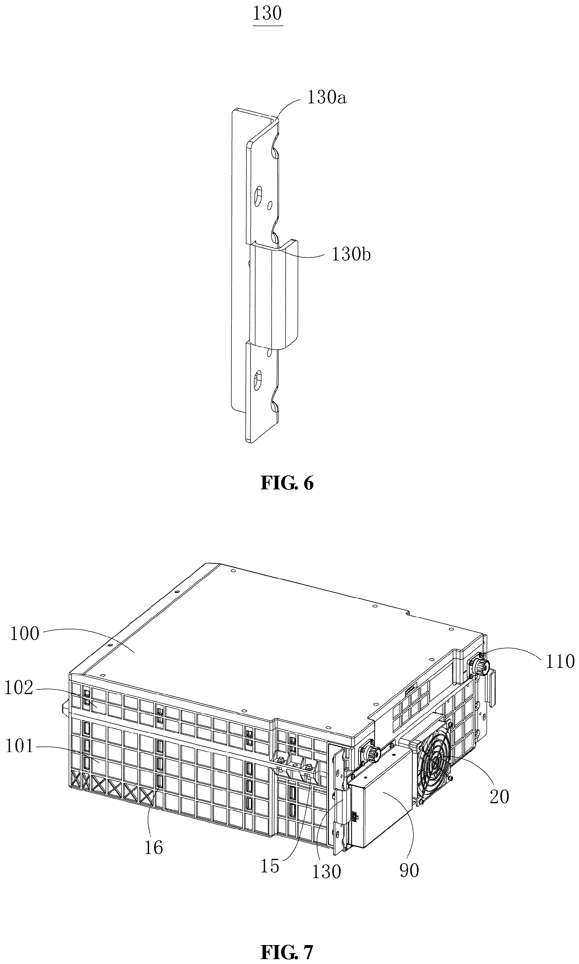

Please also refer to Fig. 6, Fig. 6 shows an isometric view of a lug-hanging piece according to embodiments of the present invention.

In order to facilitate fixing of the battery module with an energy storage cabinet or the like, a lug-hanging piece 130 is provided on the side plate 12. The lug-hanging piece 130 may be made of a metal plate such as DC01 by bending, welding or electrophoresis and the like. The lug-hanging piece 130 includes a first connection plate 130a capable of connecting with the side plate 12 and a second connection plate 130b capable of connecting with a device such as an energy storage cabinet. The first connection plate 130a and the second connection plate 130b are both L-shaped and connected with each other. The first connection plate 130a of the lug-hanging piece 130 may be fixed on the lower side plate 12a or both the lower side plate 12a and the upper side plate 12b by fasteners. The number of the lug-hanging piece 130 may be two or more depending on requirements.

In order to better manage the plurality of batteries 30, the battery module may further includes a battery management system 90 electrically connected to the plurality of batteries 30 and the fan 20. The battery management system 90 is configured to detect a plurality of parameters of the plurality of batteries 30 such as temperature and voltage. The battery management system 90 controls turn-on or turn-off of the fan 20 by detecting temperature parameters of the plurality of batteries 30. For example, a predetermined temperature is preset, and when the battery system detects temperature of one or two or more of the plurality of batteries 30 exceeds the predetermined temperature, the fan 20 is controlled to be turned on to circulate the air for cooling down the batteries 30. When the battery management system 90 detects the plurality of batteries 30 do not have a temperature higher than the predetermined temperature, the control fan 20 is turned off. The turn-on and turn-off of the fan 20 is automatically controlled by the battery management system 90 without manual monitoring.

Please refer to Fig. 7. Fig. 7 shows a schematic view of an overall structure of a battery module according to embodiments of the present invention. When the battery module according to embodiments of the present invention is assembled, it is possible to sequentially fix bottom of a plurality of batteries 30 within the first units 41 respectively, and then connect the intermediate frame 102 and the lower frame 101 such that top ends of the plurality of batteries 30 can be fixed within the second units 71 respectively. Further, the connecting lugs 15 on the upper side plate 12b and the lower side plate 12a are butt-locked, and the fan 20, the lug-hanging piece 130, the battery management system 90, the connectors 110 and the cover 100 are mounted correspondingly to form the battery module as shown in Fig. 7.

According to the battery module of embodiments of the present invention, by providing the first spacers 40 on the bottom plate 11 in a predetermined pattern to form first units 41, and providing second spacers 70 on the top plate 13 in a predetermined pattern 70 to form the second units 71 corresponding with the first units 41, and providing the plurality of batteries 30 between the first units 41 and the second units 71, airflow passages 60 are formed between the batteries 30. Further, the first protrusions 50 are provided on the side plate 12 to makes the batteries 30 near the side plate 12 not to be in contact with inner wall of the side plate 12, such that an airflow passage 60 is also formed between the batteries 30 near the side plate 12 and the inner wall of the side plate 12. Under the fan 20, an airflow entering the cavity 14 through the ventilation holes 16 can contact with the four surfaces of each of the batteries 30 through the airflow passages 60 for heat exchange and then is discharge away from the cavity 14. That is, an airflow entering through the ventilation holes 16 can flow through multiple surfaces of each battery 30, which can effectively improve environmental temperature conditions of each of the batteries 30, enable a long term and stable operation of the module, ensure safety and lifetime of the battery module, and expand application range of the batter module. In addition, the provision of the first spacers 40 and the second spacers 70 also serve to increase strength of the box 10.

Although the present invention has been described with reference to preferred embodiments, various modifications may be made thereto and equivalents thereof may substitute the involved parts without departing from the scope of the present invention. In particular, as long as there is no structural conflict, the various technical features mentioned in the various embodiments may be combined in any way. The invention is not limited to the specific embodiments disclosed herein, but includes all technical solutions falling within the scope of the claims.

## Claims

1. A battery module, **characterized by** comprising:
a box (10) having a cavity (14) and having a bottom plate (11), a top plate (13) and a side plate (12) connecting the bottom plate (11) and the top plate (13), wherein the side plate (12), the top plate (13) and the bottom plate (12) together form the cavity (14), and the side plate (12) has ventilation holes (16) communicating with the cavity (14);
first spacers (40) distributed on a surface of the bottom plate (11) facing the cavity (14) in order to form a plurality of first units (41);
a plurality of batteries (30) corresponding to the plurality of first units (41), wherein every two adjacent batteries are separated by one of the first spacers such that airflow passages (60) are formed among the plurality of batteries (30); and
a fan (20) on the side plate (12) communicating with the cavity (14) for discharging an airflow entering the cavity (14) through the ventilation holes (16)away from the cavity (14) through the airflow passages (60),
wherein each of the first spacers (40) has a height which is 5% to 10% of a height of a corresponding battery among the plurality of batteries.

2. The battery module according to claim 1, wherein the side plate (12) has first protrusions (50) that abut against the batteries (30) near the side plate (12) so that a channel communicating with the airflow passages (60) is provided between the batteries (30) and the side plate (12).

3. The battery module according to any one of claims 1 to 2, wherein each of the first spacers (40) has a thickness which is 10% to 15% of a thickness of a corresponding battery among the plurality of batteries.

4. The battery module according to any one of claims 1 to 3, wherein the top plate (13) has second spacers (70) distributed on a surface of the top plate (13) facing the cavity (14) so as to form second units (71) respectively corresponding to the first units (41), wherein each of the batteries (30) is provided between a corresponding first unit (41) and a corresponding second unit (71).

5. The battery module according to claim 4, wherein the second unit (71) has a size larger than a size of a corresponding first unit (41), and wherein second protrusions (80) are provided on a side wall of the second spacer (70) for fixing a battery (30) to a corresponding second unit (71).

6. The battery module according to claim 5, wherein the second protrusion (80) is a wedge-shaped structure and a small end of the wedge-shaped structure is located toward the bottom plate (11).

7. The battery module according to any one of claims 5 to 6, wherein a deformable groove (72) is defined between the second protrusion (80) and the second spacer (70), and has an opening facing the bottom plate (11).

8. The battery module according to any one of claims 1 to 7, wherein the side plate (12) is a split structure which comprises a lower side plate (12a) connected with the bottom plate (11) and a upper side plate (12b) connected with the top plate (13), and wherein each of the lower side plate (12a) and the upper side plate(12b) has connection lugs (15) so that the lower side plate (12a) and the upper side plate (12b) are butt-locked together.

9. The battery module according to any one of claims 1 to 8, wherein clamping grooves (72) are provided on a side of the top plate (13) facing away from the bottom plate (11) for placing electrical connectors (110), and the plurality of batteries (30) are electrically connected via the electrical connectors (110), and wherein a cover (100) is provided on the clamping grooves (72) and is connected to the top plate (13).

10. The battery module according to any one of claims 1 to 9, wherein the box (10) is a cuboid, the side plate (12) is formed by enclosure of four plate pieces, at one of which the fan (20) is located and the other three of which are respectively provided with the ventilation holes (16).

11. The battery module according to any one of claims 1 to 10, further comprises: a battery management system (90) connected with the plurality of the batteries (30) and the fan (20) for controlling turn-on or turn-off of the fan (20) by detecting temperature parameters of the plurality of the batteries (30).

## Patentansprüche

1. Batteriemodul, **gekennzeichnet durch**:
einen Kasten (10) mit einem Hohlraum (14) und mit einer Bodenplatte (11), einer Deckplatte (13) und einer die Bodenplatte (11) und die Deckplatte (13) verbindenden Seitenplatte (12), wobei die die Seitenplatte (12), die obere Platte (13) und die untere Platte (12) zusammen den Hohlraum (14) bilden, und die Seitenplatte (12) Belüftungslöcher (16) aufweist, die mit dem Hohlraum (14) in Verbindung stehen;
erste Abstandshalter (40), die auf einer Oberfläche der Bodenplatte (11) verteilt sind, die dem Hohlraum (14) zugewandt ist, um mehrere erste Einheiten (41) zu bilden;
mehrere Batterien (30), die den mehreren ersten Einheiten (41) entsprechen, wobei jeweils zwei benachbarte Batterien durch einen der ersten Abstandshalter getrennt sind, so dass Luftstromkanäle (60) unter den mehreren Batterien (30) gebildet sind; und
ein Lüfter (20) an der Seitenplatte (12), das mit dem Hohlraum (14) in Verbindung steht, um einen Luftstrom vom Hohlraum (14) durch die Luftstromkanäle (60) wegzublasen, der durch die Belüftungslöcher (16) in den Hohlraum (14) eintritt,
wobei jeder der ersten Abstandshalter (40) eine Höhe aufweist, die 5% bis 10% einer Höhe einer entsprechenden Batterie unter den mehreren Batterien beträgt.

2. Batteriemodul nach Anspruch 1, wobei die Seitenplatte (12) erste Vorsprünge (50) aufweist, die nahe der Seitenplatte (12) an den Batterien (30) anliegen, so dass ein mit den Luftstromkanälen (60) in Verbindung stehender Kanal zwischen den Batterien (30) und der Seitenplatte (12) vorgesehen ist.

3. Batteriemodul nach einem der Ansprüche 1 bis 2, wobei jeder der ersten Abstandshalter (40) eine Dicke aufweist, die 10% bis 15% einer Dicke einer entsprechenden Batterie unter den mehreren Batterien beträgt.

4. Batteriemodul nach einem der Ansprüche 1 bis 3, wobei die obere Platte (13) zweite Abstandshalter (70) aufweist, die auf einer Oberfläche der oberen Platte (13), die dem Hohlraum (14) zugewandt ist, verteilt sind, um zweite Einheiten (71) zu bilden, die jeweils den ersten Einheiten (41) entsprechen, wobei jede der Batterien (30) zwischen einer entsprechenden ersten Einheit (41) und einer entsprechenden zweiten Einheit (71) vorgesehen ist.

5. Batteriemodul nach Anspruch 4, wobei die zweite Einheit (71) eine Größe aufweist, die größer als eine Größe einer entsprechenden ersten Einheit (41) ist, und wobei zweite Vorsprünge (80) an einer Seitenwand des zweiten Abstandshalters (70) zum Befestigen einer Batterie (30) an einer entsprechenden zweiten Einheit (71) vorgesehen sind.

6. Batteriemodul nach Anspruch 5, wobei der zweite Vorsprung (80) eine keilförmige Struktur ist und ein kleines Ende der keilförmigen Struktur in Richtung der Bodenplatte (11) angeordnet ist.

7. Batteriemodul nach einem der Ansprüche 5 bis 6, wobei eine verformbare Nut (72) zwischen dem zweiten Vorsprung (80) und dem zweiten Abstandshalter (70) begrenzt ist und eine der Bodenplatte (11) zugewandte Öffnung aufweist.

8. Batteriemodul nach einem der Ansprüche 1 bis 7, wobei die Seitenplatte (12) eine geteilte Struktur ist, die eine untere Seitenplatte (12a), die mit der Bodenplatte (11) verbunden ist, und eine obere Seitenplatte (12b), die mit der Deckplatte (13) verbunden ist, aufweist, und wobei die untere Deckplatte (12a) und die obere Deckplatte (12b) jeweils Anschlussfahnen (15) aufweisen, so dass die untere Deckplatte (12a) und die obere Deckplatte (12b) miteinander stumpf verriegelt sind.

9. Batteriemodul nach einem der Ansprüche 1 bis 8, wobei Klemmnuten (72) auf einer von der Bodenplatte (11) abgewandten Seite der Deckplatte (13) zur Platzierung elektrischer Steckverbinder (110) vorgesehen sind, und die mehreren Batterien (30) über die elektrischen Verbinder (110) elektrisch verbunden sind, und wobei eine Abdeckung (100) an den Klemmnuten (72) vorgesehen ist und mit der oberen Platte (13) verbunden ist.

10. Batteriemodul nach einem der Ansprüche 1 bis 9, wobei der Kasten (10) ein Quader ist, die Seitenplatte (12) durch Einfassung von vier Plattenteilen gebildet ist, an einem davon sich der Lüfter (20) befindet und die anderen drei von ihnen jeweils mit den Belüftungslöchern (16) versehen sind.

11. Batteriemodul nach einem der Ansprüche 1 bis 10, ferner umfassend: ein Batteriemanagementsystem (90), das mit den mehreren Batterien (30) und dem Lüfter (20) zum Steuern des Ein- oder Ausschaltens des Lüfters (20) durch Erfassen von Temperaturparametern der mehreren Batterien (30) verbunden ist.

## Revendications

1. Module de batteries, **caractérisé en ce qu'**il comprend :
un boîtier (10) ayant une cavité (14) et ayant une plaque inférieure (11), une plaque supérieure (13) et une plaque latérale (12) reliant la plaque inférieure (11) et la plaque supérieure (13), où la plaque latérale (12), la plaque supérieure (13) et la plaque inférieure (11) forment ensemble la cavité (14), et la plaque latérale (12) a des trous de ventilation (16) communiquant avec la cavité (14) ;
des premiers espaceurs (40) répartis sur une surface de la plaque inférieure (11) faisant face à la cavité (14) afin de former une pluralité de premières unités (41) ;
une pluralité de batteries (30) correspondant à la pluralité de premières unités (41), où chaque deux batteries adjacentes sont séparées par l'un des premiers espaceurs de sorte que des passages de flux d'air (60) soient formés parmi la pluralité de batteries (30) ; et
un ventilateur (20) sur la plaque latérale (12) communiquant avec la cavité (14) pour évacuer un flux d'air entrant dans la cavité (14) à travers les trous de ventilation (16) loin de la cavité (14) à travers les passages de flux d'air (60),
dans lequel chacun des premiers espaceurs (40) a une hauteur qui est de 5 % à 10 % d'une hauteur d'une batterie correspondante parmi la pluralité de batteries.

2. Module de batteries selon la revendication 1, dans lequel la plaque latérale (12) a des premières saillies (50) qui viennent en butée contre les batteries (30) près de la plaque latérale (12) de sorte qu'un canal communiquant avec les passages de flux d'air (60) soit prévu entre les batteries (30) et la plaque latérale (12).

3. Module de batteries selon l'une quelconque des revendications 1 et 2, dans lequel chacun des premiers espaceurs (40) a une épaisseur qui est de 10 % à 15 % d'une épaisseur d'une batterie correspondante parmi la pluralité de batteries.

4. Module de batteries selon l'une quelconque des revendications 1 à 3, dans lequel la plaque supérieure (13) a des deuxièmes espaceurs (70) répartis sur une surface de la plaque supérieure (13) faisant face à la cavité (14) de manière à former des deuxièmes unités (71) correspondant respectivement aux premières unités (41), où chacune des batteries (30) est prévue entre une première unité correspondante (41) et une deuxième unité correspondante (71) .

5. Module de batteries selon la revendication 4, dans lequel la deuxième unité (71) a une taille supérieure à une taille d'une première unité correspondante (41), et où des deuxièmes saillies (80) sont prévues sur une paroi latérale du deuxième espaceur (70) pour fixer une batterie (30) à une deuxième unité correspondante (71).

6. Module de batteries selon la revendication 5, dans lequel la deuxième saillie (80) est une structure en forme de coin et une petite extrémité de la structure en forme de coin est située vers la plaque inférieure (11).

7. Module de batteries selon l'une quelconque des revendications 5 à 6, dans lequel une rainure déformable (72) est définie entre la deuxième saillie (80) et le deuxième espaceur (70), et a une ouverture faisant face à la plaque inférieure (11).

8. Module de batteries selon l'une quelconque des revendications 1 à 7, dans lequel la plaque latérale (12) est une structure divisée qui comprend une plaque latérale inférieure (12a) reliée à la plaque inférieure (11) et une plaque latérale supérieure (12b) reliée à la plaque supérieure (13), et où chacune de la plaque latérale inférieure (12a) et de la plaque latérale supérieure (12b) a des pattes de liaison (15) de sorte que la plaque latérale inférieure (12a) et la plaque latérale supérieure (12b) soient verrouillées bout à bout ensemble.

9. Module de batteries selon l'une quelconque des revendications 1 à 8, dans lequel des rainures de serrage (72) sont prévues sur un côté de la plaque supérieure (13) à l'opposé de la plaque inférieure (11) pour placer des connecteurs électriques (110), et la pluralité de batteries (30) sont reliées électriquement par les connecteurs électriques (110), et où un couvercle (100) est prévu sur les rainures de serrage (72) et est relié à la plaque supérieure (13).

10. Module de batteries selon l'une quelconque des revendications 1 à 9, dans lequel le boîtier (10) est cuboïde, la plaque latérale (12) est formée par la fermeture de quatre pièces de plaque, au niveau d'une pièce desquelles le ventilateur (20) est situé et dont les trois autres sont respectivement pourvues des trous de ventilation (16) .

11. Module de batteries selon l'une quelconque des revendications 1 à 10, comprenant en outre : un système de gestion de batteries (90) relié à la pluralité des batteries (30) et au ventilateur (20) pour commander la mise en marche ou l'arrêt du ventilateur (20) en détectant des paramètres de température de la pluralité de batteries (30) .
